# EUROPÄISCHE PATENTSCHRIFT

(11) **EP 0 474 283 B1**
(45) Veröffentlichungstag und Bekanntmachung des Hinweises auf die Patenterteilung: **02.11.1995**
(21) Anmeldenummer: 91202159.9
(22) Anmeldetag: 23.08.1991
(51) Int. Cl.: H04L 12/56

(54) **Koppelfeld für ein asynchrones Zeitvielfachübermittlungssystem**
ATM switching network
Réseau de commutation à technique ATM (Asynchronous Transfer Mode)

(30) Priorität: 31.08.1990 DE 4027611
(43) Veröffentlichungstag der Anmeldung: 11.03.1992
(73) Patentinhaber: Philips Patentverwaltung GmbH, 22335 Hamburg (DE); Philips Electronics N.V., 5621 BA Eindhoven (NL)
(72) Erfinder: Wölker, Roland Dr., W-8520 Erlangen (DE); Mertelmeier, Christine, W-8520 Erlangen (DE)
(74) Vertreter: Volmer, Georg, Dipl.-Ing.

(56) Entgegenhaltungen:
- INTERNATIONAL SYMPOSIUM ON COMPUTER ARCHITECTURE 1983, LOS ANGELES US, Seiten 284- 300; M.KUMAR ET AL.: 'SWITCHING STRATEGIES IN A CLASS OF PACKET SWITCHING NETWORKS'
- INTERNATIONAL CONFERENCE ON COMMUNICATIONS, Bd. 4, April 1990, NEW YORK US, Seiten 1596 - 1601; A. FORCINA EL AL.: 'A STRATEGY FOR ATM INTRODUCTION INTO PUBLIC NETWORKS'

## Beschreibung

Die Erfindung bezieht sich auf ein Koppelfeld für ein asynchrones Zeitvielfachübermittlungssystem mit einer ersten Stufe mit mehreren Koppelblöcken, denen auf Zübringerleitungen für verschiedene Abnehmerleitungen bestimmte Zellen und Wegelenkungsinformation geliefert werden und die mit wenigstens einem Koppelblock einer zweiten Stufe gekoppelt sind.

In einem asynchronen Zeitvielfachübermittlungssystem werden Nutzinformationen, z.B. Fernsprech-, Bild- oder Tonsignale, in Blöcken fester Länge über Anordnungen zur digitalen Signalsverarbeitung gesendet. Als ein Block fester Länge wird eine Zelle bezeichnet, die eine vorbestimmte Anzahl von Bytes (z.B. 53 Bytes) aufweist. Eine solche Zelle kann über die digitalen Anordnungen seriell, d.h. Bit für Bit, oder parallel, z.B. Byte für Byte, übertragen werden. Jede Zelle besteht aus einem Kopffeld mit einer Länge von beispielsweise 5 Byte und einem Informationsfeld, in dem die Nutzinformation untergebracht ist, mit einer Länge von beispielsweise 48 Byte. In einem solchen Kopffeld sind Wegekennung, Daten zur Fehlererkennung (Kopffeldfehlerblock) und weitere Steuerinformationen vorhanden. Unter einer Wegekennung sind Wegelenkungsinformationen und Verbindungskennungen zu verstehen. Die Wegelenkungsinformation, die auch "Tag" genannt wird, wird innerhalb des Zeitvielfachübermittlungssystems in bestimmten Übermittlungsanordnungen hinzugefügt und enthält eine Angabe über ein Teilziel der Zelle innerhalb der Übermittlungsanordnung. Sie kann im Kopffeld der Zelle hinzugefügt werden oder über eine weitere Verbindung zum Teilziel gegeben werden. Die Verbindungskennung, die auch als VCI (virtual channel identifier) bezeichnet wird, enthält die Angabe über das Ziel bzw. Teilziel der Zelle in dem asynchronen Zeitvielfachübermittlungssystem. Zur Übermittlung einer Zelle wird anhand der Verbindungskennung ein virtueller Kanal zur Verfügung gestellt. In der Regel wird ein VCI nach Erreichen einer Vermittlungsstelle jeweils verändert.

Zellen sind aufeinanderfolgend bestimmten Zeitabschnitten zugeordnet. Die Dauer eines solchen Zeitabschnittes hängt von der zugrundegelegten Taktfrequenz der Übermittlungskomponente ab. Falls keine Nutzinformation vorhanden ist, werden in einem solchen Zeitabschnitt Leerzellen übertragen, d.h. Zellen ohne Nutzinformation. Zellen die eine Nutzinformation beinhalten, werden als Nutzzellen bezeichnet.

Bei der Übertragung der Zellen zwischen Teilnehmern durchlaufen die Zellen Koppelfelder, in denen Wege durch Auswertung der Wegekennung hergestellt werden. Ein solches Koppelfeld, das mit mehreren Zubringer- und Abnehmerleitungen verbunden ist, setzt sich aus mehreren Koppelblökken zusammen. Ein solcher Koppelblock mit mehreren Eingangs- und Ausgangsleitungen besteht aus mehreren Koppelelementen. Ein Koppelelement ist mit mehreren Eingangsleitungen und einer Ausgangsleitung verbunden. In einem Koppelelement werden dabei Zellen von einer Eingangsleitung auf eine Ausgangsleitung gegeben. Bei Eintreffen von Zellen auf mehreren Zubringerleitungen während eines Zeitabschnittes, die auf eine Ausgangsleitung zugreifen wollen, werden die Zellen in einer bestimmten Reihenfolge weiterverarbeitet.

Aus der Zeitschrift "telcom report", Titel "Mit ATM zur bitvariablen Kommunikation", Nr. 3, 1990, Heft 1, Seiten 4 bis 7 ist ein asynchrones Zeitvielfachübermittlungssystem bekannt, welches ein Koppelfeld zur Vermittlung von Zellen enthält. Über Anschlußgruppen sind mit dem Koppelfeld verschiedene Teilnehmereinrichtungen, z.B. ein Videogerät, ein Personalcomputer und eine Vermittlungssteuerung verbunden.

Der Erfindung liegt die Aufgabe zugrunde, ein Koppelfeld zu schaffen, mit welchem jede Zubringerleitung mit jeder Abnehmerleitung über eine Anzahl von Koppelblöcken gekoppelt werden kann.

Diese Aufgabe wird bei einem Koppelfeld der eingangs genannten Art dadurch gelöst, daß Eingänge von Koppelblöcken der ersten Stufe mit Zubringerleitungen und wenigstens einem Ausgang eines Koppelblocks der zweiten Stufe gekoppelt sind und daß Ausgänge von Koppelblöcken der ersten Stufe mit Abnehmerleitungen und wenigstenes einem Eingang eines Koppelblockes der zweiten Stufe gekoppelt sind. In dieser Konfiguration kann jede Zubringerleitung über jeden Koppelblock der zweiten Stufe mit jeder Abnehmerleitung gekoppelt werden. Hierbei wird eine minimale Anzahl von Koppelblöcken verwendet. In einem konventionellen Koppelfeld wird immer eine dritte Stufe benutzt.

Weiter liegt der Erfindung die Aufgabe zugrunde, ein Koppelfeld zu schaffen, welches auf einfache Weise der Steuerschaltung eines Koppelblockes Steuerinformationen liefert.

Diese Aufgabe wird dadurch gelöst, daß entweder mit wenigstens einem Eingang oder mit wenigstens einem Ausgang jedes Koppelblockes eine Zellenausblendeschaltung gekoppelt ist, die jeweils mit einer Steuerschaltung des zugeordneten Koppelblockes verbunden ist.

Das Koppelfeld besteht aus einer ersten Stufe mit mehreren Koppelblöcken und einer zweiten Stufe mit wenigstens einem Koppelblock. Die Eingänge der Koppelblöcke der ersten Stufe sind jeweils mit Zubringerleitungen und mit wenigstenes einem Ausgang eines Koppelblockes der zweiten Stufe gekoppelt. Die Ausgänge der Koppelblöcke der ersten Stufe sind jeweils mit Abnehmerleitungen und mit wenigstens einem Eingang eines Koppelblockes der zweiten Stufe gekoppelt. Zwischen den verschiedenen Koppelblöcken der beiden Stufen können Schnittstellenschaltungen mit Parallel-Serien-Umsetzern bzw. Serien-Parallel-Umsetzern angeordnet sein, um insbesondere bei großen Koppelfeldern den Aufwand an Leitungen zwischen den Koppelblöcken zu verringern. Durch diese Art der Zusammenschaltung zwischen den Koppelblöcken der ersten und zweiten Stufe kann eine Steuerzelle mit einer Steuer- und/oder Einstellinformation, die einem Eingang eines Koppelblocks der ersten Stufe geliefert wird, zu jedem Koppelblock gelangen, wenn in diesem bestimmte Wege zur Übertragung der Steuerzellen freigegeben werden. Eine solche Steuerzelle wird von der Zellenausblendeschaltung erkannt, ausgeblendet und der einem Koppelblock zugeordneten Steuerschaltung zugeführt. Anhand der Informationen der Steuerzelle kann die Steuerschaltung entsprechende Steuer- und Einstellvorgänge vornehmen.

Eine optimale Ausnutzung der Koppelblöcke ergibt sich, wenn die Hälfte der Eingänge jedes Koppelblockes der ersten Stufe mit Zubringerleitungen und die Hälfte der Ausgänge jedes Koppelblockes der ersten Stufe mit Abnehmerleitungen gekoppelt sind, und wenn die übrigen Ausgänge jedes Koppelblockes der ersten Stufe gleichmäßig mit den Eingängen der Koppelblöcke der zweiten Stufe und jeder Ausgang jedes Koppelblockes der zweiten Stufe gleichmäßig mit den übrigen Eingängen der Koppelblöcke der ersten Stufe gekoppelt sind.

Steuerzellen mit Steuer- und Einstellinformationen werden von einer System-Kontrollschaltung erzeugt, die mit einem Eingang eines Koppelblockes der ersten Stufe über eine Anschlußgruppe gekoppelt ist.

Zur Meldung der Statusinformationen einer Steuerschaltung des zugeordneten Koppelblockes an die System-Kontrollschaltung ist vorgesehen, daß entweder mit wenigstens einem Eingang oder mit wenigstens einem Ausgang jedes Koppelblockes eine Zelleneinblendeschaltung gekoppelt ist, die jeweils mit einer Steuerschaltung des zugeordneten Koppelblockes verbunden ist. Hierbei werden von den Zelleneinblendeschaltungen Steuerzellen mit Statusinformationen geliefert. Empfangen werden die Steuerzellen von der System-Kontrollschaltung, die mit einem Ausgang eines Koppelblockes der ersten Stufe über die Anschlußgruppe verbunden ist.

Vor der Lieferung einer Zelle ins Koppelfeld wird in einer Anschlußgruppe, die z.B. mit einer Teilnehmereinrichtung verbunden ist, eine Wegelenkungsinformation erzeugt. Die Wegelenkungsinformation enthält die Angabe über das Ziel in dem Koppelfeld. Beispielsweise kann die Wegelenkungsinformation zum Kopffeld einer Zelle hinzugefügt werden. Einfacher ist jedoch, wenn die Wegelenkungsinformation für jede Zelle auf Wegeverbindungen zu den Koppelblöcken und in den Koppelblöcken übertragen werden.

In einer Ausführungsform für die Zellenausblendeschaltung ist vorgesehen, daß diese einen ersten Umschalter, der Zellen in einem ersten Zustand an die zugeordnete Steuerschaltung und in einem zweiten Zustand an den zugeordneten Koppelblock leitet, und eine Analyseschaltung enthält, welche die zugeführte Wegelenkungsinformation analysiert und dem ersten Umschalter bei einer Steuerzelle ein Stellsignal zur Setzung in den ersten Zustand zuführt.

In einer Ausführungsform für die Zelleneinblendeschaltung ist vorgesehen, daß diese einen zweiten Umschalter enthält, der in einem ersten Zustand Zellen von einem Ausgang des zugeordneten Koppelblocks und in einem zweiten Zustand Steuerzellen von der zugeordneten Steuerschaltung weiterleitet und der von der zugeordneten Steuerschaltung gesteuert wird.

In einer Weiterbildung der Erfindung ist vorgesehen, daß alle Koppelblöcke eine gleiche Anzahl von Ein- und Ausgängen haben und daß die Anzahl der Eingänge gleich der Anzahl der Ausgänge ist. Hierbei können die Koppelblöcke jeweils sechzehn Eingänge und sechzehn Ausgänge haben und die Anzahl der Koppelblöcke in der zweiten Stufe kann gleich der Hälfte der Koppelblöcke in der ersten Stufe sein. Ein solcher Koppelblock kann aus 64 Koppelelementen mit vier Eingangs- und einer Ausgangsleitung aufgebaut sein. Bekannt ist ein solches Koppelelement aus der Europäischen Patentanmeldung EP-A-0 454 218. Die Zellen verlassen dabei ein Koppelelement in der Reihenfolge in der sie eingetroffen sind. Bei gleichzeitig eintreffenden Zellen, werden diese in einer vorgegebenen Reihenfolge auf die Ausgangsleitung des Koppelelementes gegeben. Die erste Stufe kann beispielsweise aus vier und die zweite Stufe aus zwei Koppelblöcken bestehen.

Ausführungsbeispiele der Erfindung werden nachstehend anhand der Zeichnungen näher erläutert. Es zeigen:
Fig. 1 eine schematisch skizzierte Vermittlungsstelle in einem asynchronen Zeitvielfachübermittlungssystem,
Fig. 2 ein in der Vermittlungsstelle verwendetes, detalliert dargestelltes Koppelfeld,
Fig. 3 eine in dem Koppelfeld verwendete und näher dargestellte Zellenausblendeschaltung und
Fig. 4 eine in dem Koppelfeld verwendete und näher dargestellte Zelleneinblendeschaltung.

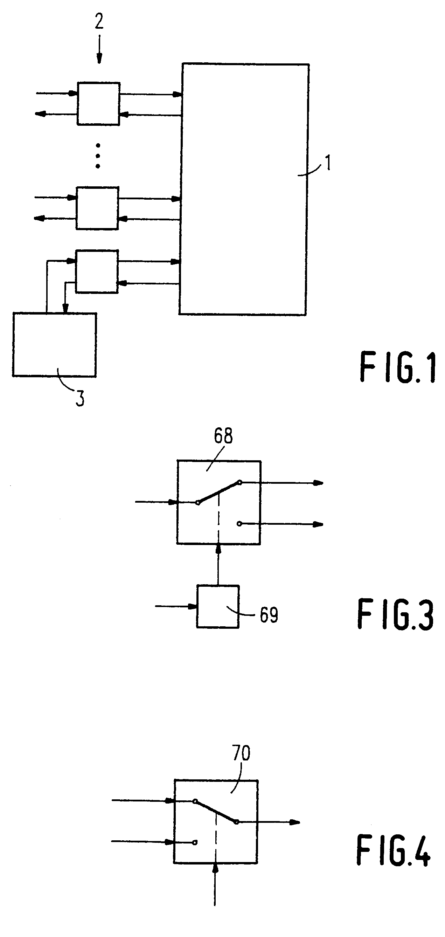

Die in Fig. 1 dargestellte Vermittlungsstelle ist Teil eines asynchronen Zeitvielfachübermittlungsystems und enthält ein Koppelfeld 1, mehrere Anschlußgruppen 2 und eine System-Kontrollschaltung 3. An die Anschlußgruppe 2 sind Teilnehmereinrichtungen angeschlossen. Unter Teilnehmereinrichtungen sind Endeinrichtungen (z.B. ein Videosignalgerät, ein Fernsprecher usw.), ein Fernleitungsanschluß oder die System-Kontrollschaltung 3 zu verstehen. An den Fernleitungsanschluß sind weitere Vermittlungsanordnungen, z.B. eine Vermittlungsstelle, angeschlossen. Die System-Kontrollschaltung 3 die über eine Anschlußgruppe 2 mit dem Koppelfeld 1 gekoppelt ist, steuert die Anschlußgruppen 2 und das Koppelfeld 1. Diese Steuerung wird mittels spezieller Steuerzellen, die von der System-Kontrollschaltung 3 ausgesendet werden, über eine Anschlußgruppe 2 dem Koppelfeld 1 und über das Koppelfeld 1 weiteren Anschlußgruppen 2 zugeführt werden, bewirkt. Die Pfeile zwischen dem Koppelfeld 1 und den Anschlußgruppen 2 und zwischen der System-Kontrollschaltung 3 und einer Anschlußgruppe 2 sollen andeuten, daß Steuerzellen einerseits von dem Koppelfeld 1 über eine Anschlußgruppe 2 zur System-Kontrollschaltung 3 bzw. von dem Koppelfeld 1 zu weiteren Anschlußgruppen 2 und andererseits von der System-Kontrollschaltung 3 über eine Anschlußgruppe 2 zum Koppelfeld 1 bzw. von einer Anschlußgruppe 2 zum Koppelfeld 1 gelangen. Es werden also auch Steuerzellen von der System-Kontrollschaltung 3 über das Koppelfeld 1 zu weiteren Anschlußgruppen 2 gesendet.

In jeder Anschlußgruppe 2 werden für jede Zelle aus den Informationen, die im Kopffeld einer Zelle vorhanden sind, Wegelenkungsinformationen erzeugt, die einen Weg durch das Koppelfeld 1 betreffen. Die Wegelenkungsinformation wird über Wegeverbindungen von einer Anschlußgruppe 2 zum Koppelfeld 1 und über weitere Wegeverbindungen im Koppelfeld 1 zu einzelnen Schaltungskomponenten im Koppelfeld 1 geführt. Außer der Erzeugung einer Wegelenkungsinformation werden in den Anschlußgruppen beispielsweise vorgegebene Zellen aus dem Datenstrom ausgeblendet, die z.B. zur Vorsignalisierung und Überwachung dienen, und eine hergestellte Verbindung auf Überlast überwacht.

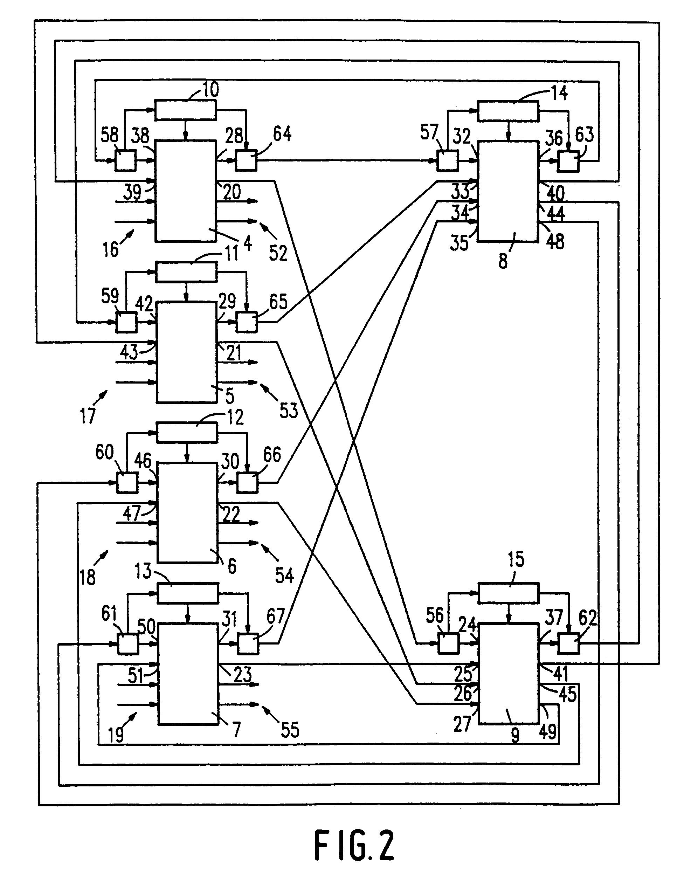

In Fig. 2 ist ein schematisch skizziertes Ausführungsbeispiel für ein Koppelfeld 1 gezeigt. Das Koppelfeld 1 enthält eine erste Stufe mit vier Koppelblöcken 4 bis 7 und eine zweite Stufe mit zwei Koppelblöcken 8 und 9. Jeder Koppelblock, der sechzehn Ein- und Ausgänge aufweist, ist aus vierundsechzig Koppelelementen mit jeweils vier Eingängen und einem Ausgang zusammengesetzt. Ein solches Koppelelement, das beispielsweise aus der Europäischen Patentanmeldung EP-A-0 454 218 bekannt ist, verteilt die an den Eingängen ankommenden Zellen auf seinen Ausgang. Dabei verlassen die Zellen das Koppelelement in der Reihenfolge, in der sie an den Eingängen eingetroffen sind. Bei gleichzeitig eintreffenden Zellen an verschiedenen Eingängen, werden diese in einer vorgegebenen Reihenfolge auf die Ausgangsleitung des Koppelelementes gegeben. Jedem Koppelblock 4 bis 9 ist noch jeweils eine Steuerschaltung 10 bis 15 zugeordnet.

Jeder Koppelblock 4 bis 9 empfängt an einem Eingang ein paralleles Datenwort und gibt an einem Ausgang ein paralleles Datenwort ab. Ein paralleles Datenwort hat dabei die Länge von einem Byte. Bei einer Zellenlänge von beispielsweise 53 Bytes, ist nach dem Empfang von 53 Bytes eine Zelle komplett in einem Koppelblock 4 bis 9 eingelesen. Jeder Eingang weist zusätzlich noch einen Anschluß für eine Wegeverbindung auf, auf der eine Wegelenkungsinformation zum Koppelblock 4 bis 9 gelangt.

In der Zeichnung der Fig. 2 soll ein hinführender bzw. wegführender Pfeil an einem Koppelblock insgesamt vier Eingänge bzw. Ausgänge darstellen, zu denen bzw. von denen parallele Datenwörter und Wegelenkungsinformationen geliefert werden.

Acht Eingänge 16 bis 19 jedes Koppelblockes 4 bis 7 der ersten Stufe sind mit Zubringerleitungen und Wegeverbindungen verbunden, auf denen ein Datenstrom mit Zellen und Wegelenkungsinformationen geliefert werden. Jeweils vier Ausgänge 20 bis 23 jedes Koppelblockes 4 bis 7 der ersten Stufe sind mit jeweils vier Eingängen 24 bis 27 des Koppelblockes 9 der zweiten Stufe gekoppelt. Des weiteren sind jeweils vier Ausgänge 28 bis 31 der Koppelblöcke 4 bis 7 der ersten Stufe mit jeweils vier Eingängen 32 bis 35 des Koppelblockes 8 der zweiten Stufe gekoppelt. Vier Ausgänge 36 des Koppelblocks 8 und vier Ausgänge 37 des Koppelblocks 9 sind mit jeweils vier Eingängen 38 und 39 des Koppelblocks 4 der ersten Stufe, vier Ausgänge 40 des Koppelblocks 8 und vier Ausgänge 41 des Koppelblocks 9 sind mit jeweils vier Eingängen 42 und 43 des Koppelblocks 5, vier Ausgänge 44 des Koppelblocks 8 und vier Ausgänge 45 des Koppelblocks 9 sind mit jeweils vier Eingängen 46 und 47 des Koppelblocks 6 und vier Ausgänge 48 des Koppelblocks 8 und vier Ausgängen 49 des Koppelblocks 9 sind mit jeweils vier Eingängen 50 und 51 des Koppelblocks 7 gekoppelt. Jeder Koppelblock 4 bis 7 weist noch jeweils acht Ausgänge 52 bis 55 auf, die mit Abnehmerleitungen verbunden sind. In dem Koppelfeld 1 werden in den einzelnen Koppelblöcken anhand der Wegelenkungsinformation solche Verbindungen geschaffen, daß eine Zelle auf eine vorgegebene Abnehmerleitung gelangt.

Vor einem der vier Eingänge 24, 32, 38, 42, 46 und 50 der Koppelblöcke 4 bis 9 ist jeweils eine Zellenausblendeschaltung 56 bis 61 angeordnet. Eine Zellenausblendeschaltung 56 bis 61 blendet aus dem einen der Eingänge gelieferten Zellenstrom Steuerzellen aus, die den zugeordneten Steuerschaltungen 10 bis 15 geliefert werden. Eine Steuerschaltung 10 bis 15 entnimmt dem Informationsfeld einer Steuerzelle Steuer- und Einstellinformationen, mit deren Hilfe sie den zugeordneten Koppelblock 4 bis 9 beispielsweise bei der Systeminitialisierung einstellt.

Eine Steuerschaltung 10 bis 15 liefert noch einer zugeordneten Zelleneinblendeschaltung 62 bis 67 Steuerzellen mit Statusinformationen, die in den Zellenstrom eingeliefert werden, der von jeweils einem der Eingänge 28 bis 31, 36 und 37 herkommt.

Aufgrund der erfindungsgemäßen Anordnung der Koppelblöcke 4 bis 9 in dem Koppelfeld 1 wird bei Lieferung von Steuerzellen über einen beliebig festgelegten Eingang 16 bis 19 der Koppelblöcke 4 bis 7 der ersten Stufe erreicht, daß jedem Koppelblock 4 bis 9 Steuerzellen geliefert werden können. Ebenso erhält jeweils ein Ausgang 52 bis 55 eines Koppelblockes 4 bis 7 der ersten Stufe eine Steuerzelle mit Statusinformationen von jeder Steuerschaltung 10 bis 15. Die Steuerzellen werden dabei von der System-Kontrollschaltung 3 über eine Anschlußgruppe 2 dem Eingang eines Koppelblockes 4 bis 7 der ersten Stufe geliefert und ebenso erhält die System-Kontrollschaltung 3 über eine Anschlußgruppe 2 von einem der vier Ausgänge 52 bis 55 eines Koppelblockes 4 bis 7 Steuerzellen mit Statusinformationen.

Insbesondere bei längeren Leitungsverbindungen zwischen den einzelnen Koppelblöcken der beiden Stufen können Schnittstellen erforderlich sein, die eine Parallel-Seriell-Umsetzung bzw. Serien-Parallel-Umsetzung und eine Verwürfelung und Entwürfelung mit Zellen durchführen.

Ein Ausführungsbeispiel für eine Zellenausblendeschaltung 56 bis 61 ist in der Fig. 3 dargestellt. Diese enthält einen ersten Umschalter 68, der in einem ersten Zustand eine von einem Koppelblock 4 bis 9 gelieferte Zelle der zugeordneten Steuerschaltung 10 bis 15 und in einem zweiten Zustand eine Zelle dem zugeordneten Koppelblock 4 bis 9 liefert. Gesteuert wird der erste Umschalter 68 von einer Analyseschaltung 69 mittels eines Stellsignals über eine Steuerverbindung. Die Analyseschaltung 69 erhält über eine Wegeverbindung die Wegelenkungsinformation und stellt anhand der Wegelenkungsinformation den ersten Umschalter 68 ein.

Ein Ausführungsbeispiel für eine Zelleneinblendeschaltung 62 bis 67 ist in der Fig. 4 dargestellt. Die Zelleneinblendeschaltung 62 bis 67 enthält einen zweiten Umschalter 70, der in einem ersten Zustand die von dem zugeordneten Koppelblock 4 bis 9 gelieferte Zelle und in einem zweiten Zustand die von der Steuerschaltung 10 bis 15 gelieferte Steuerzelle mit Statusinformationen an den Ausgang des zweiten Umschalters 70 liefert. Gesteuert wird die Zelleneinblendeschaltung 62 bis 67 von der zugeordneten Steuerschaltung 10 bis 15.

Es sei noch erwähnt, daß aus Gründen der Übersichtlichkeit in den Figuren 1 bis 4 Taktleitungen nicht näher dargestellt sind.

## Patentansprüche

1. Koppelfeld für ein asynchrones Zeitvielfachübermittlungssystem mit einer ersten Stufe mit mehreren Koppelblöcken (4 bis 7), denen auf Zubringerleitungen für verschiedene Abnehmerleitungen bestimmte Zellen und Wegelenkungsinformationen geliefert werden und die mit wenigstens einem Koppelblock (8, 9) einer zweiten Stufe gekoppelt sind,
dadurch gekennzeichnet,
daß Eingänge von Koppelblöcken (4 bis 7) der ersten Stufe mit Zubringerleitungen und wenigstens einem Ausgang eines Koppelblockes (8, 9) der zweiten Stufe gekoppelt sind und daß Ausgänge von Koppelblöcken der ersten Stufe mit Abnehmerleitungen und wenigstens einem Eingang eines Koppelblockes der zweiten Stufe gekoppelt sind.

2. Koppelfeld nach Anspruch 1,
dadurch gekennzeichnet,
daß entweder mit wenigstens einem Eingang oder mit wenigstens einem Ausgang jedes Koppelblockes eine Zellenausblendeschaltung (56 bis 61) gekoppelt ist, die jeweils mit einer Steuerschaltung (10 bis 15) des zugeordneten Koppelblockes verbunden ist.

3. Koppelfeld nach Anspruch 1 oder 2,
dadurch gekennzeichnet,
daß die Hälfte der Eingänge (16 bis 19) jedes Koppelblockes (4 bis 7) der ersten Stufe mit Zubringerleitungen und die Hälfte der Ausgänge (52 bis 55) jedes Koppelblockes der ersten Stufe mit Abnehmerleitungen gekoppelt sind und daß die übrigen Ausgänge (20 bis 23, 28 bis 31) jedes Koppelblockes der ersten Stufe gleichmäßig mit den Eingängen (24 bis 27, 32 bis 35) der Koppelblöcke (8, 9) der zweiten Stufe und jeder Ausgang (36, 40, 44, 48; 37, 41, 45, 49) jedes Koppelblockes der zweiten Stufe gleichmäßig mit den übrigen Eingängen (38, 39; 42, 43; 46, 47; 50, 51) der Koppelblöcke der ersten Stufe gekoppelt sind.

4. Koppelfeld nach Anspruch 1, 2 oder 3
dadurch gekennzeichnet,
daß ein Eingang (16 bis 19) eines Koppelblockes (4 bis 7) der ersten Stufe mit einer Steuerzellen mit Steuer- und/oder Einstellinformationen liefernden System-Kontrollschaltung (3) gekoppelt ist.

5. Koppelfeld nach einem der vorhergehenden Ansprüche,
dadurch gekennzeichnet,
daß entweder mit wenigstens einem Eingang (28 bis 31, 36, 37) oder mit wenigstens einem Ausgang jedes Koppelblockes (4 bis 9) eine Zelleneinblendeschaltung (62 bis 67) gekoppelt ist, die jeweils mit einer Steuerschaltung (10 bis 15) des zugeordneten Koppelblockes verbunden ist.

6. Koppelfeld nach Anspruch 5,
dadurch gekennzeichnet,
daß von den Zelleneinblendeschaltungen (62 bis 67) Steuerzellen mit Statusinformationen geliefert werden und daß ein Ausgang eines Koppelblockes (4 bis 7) der ersten Stufe mit der Steuerzellen empfangenden System-Kontrollschaltung (3) gekoppelt ist.

7. Koppelfeld nach einem der vorhergehenden Ansprüche,
dadurch gekennzeichnet,
daß die Wegelenkungsinformation für jede Zelle auf Wegeverbindungen zu den Koppelblöcken (4 bis 9) und in den Koppelblöcken übertragen wird.

8. Koppelfeld nach einem der vorhergehenden Ansprüche,
dadurch gekennzeichnet,
daß die Zellenausblendeschaltung (56 bis 61) einen ersten Umschalter (68), der Zellen in einem ersten Zustand an die zugeordnete Steuerschaltung (10 bis 15) und in einem zweiten Zustand an den zugeordneten Koppelblock (4 bis 9) leitet, und eine Analyseschaltung (69) enthält, welche die zugeführte Wegelenkungsinformation analysiert und dem ersten Umschalter bei einer Steuerzelle ein Stellsignal zur Setzung in den ersten Zustand zuführt.

9. Koppelfeld nach einem der Ansprüche 5 bis 8,
dadurch gekennzeichnet,
daß die Zelleneinblendeschaltung (62 bis 67) einen zweiten Umschalter (70) enthält, der in einem ersten Zustand Zellen von einem Ausgang (28 bis 31; 36, 37) des zugeordneten Koppelblockes (4 bis 9) und in einem zweiten Zustand Steuerzellen von der zugeordneten Steuerschaltung (10 bis 15) weiterleitet und der von der zugeordneten Steuerschaltung gesteuert wird.

10. Koppelfeld nach einem der vorhergehenden Ansprüche,
dadurch gekennzeichnet,
daß alle Koppelblöcke (4 bis 9) eine gleiche Anzahl von Ein- und Ausgängen haben und daß die Anzahl der Eingänge gleich der Anzahl der Ausgänge ist.

11. Koppelfeld nach Anspruch 10,
dadurch gekennzeichnet,
daß die Koppelblöcke (4 bis 9) jeweils sechzehn Eingänge und sechzehn Ausgänge haben und daß die Anzahl der Koppelblöcke (8, 9) in der zweiten Stufe gleich der Hälfte der Koppelblöcke (4 bis 7) in der ersten Stufe ist.

## Claims

1. Switching network for an asynchronous time-division multiplex transmission system comprising a first stage which includes a plurality of switching blocks (4 to 7) which, over auxiliary lines, are supplied with cells and routing information intended for various trunk lines and are coupled to at least one switching block (8, 9) of a second stage, characterized in that inputs of switching blocks (4 to 7) of the first stage are coupled to auxiliary lines and at least one output of a switching block (8, 9) of the second stage and in that outputs of switching blocks of the first stage are coupled to trunk lines and at least one input of a switching block of the second stage.

2. Switching network as claimed in Claim 1, characterized in that a cell extraction circuit (56 to 61) is coupled to either at least one input or at least one output of each switching block, which circuit is always connected to a control circuit (10 to 15) of the allocated switching block.

3. Switching network as claimed in Claim 1 or 2, characterized in that half the inputs (16 to 19) of each switching block of the first stage are coupled to the auxiliary lines and half the outputs (52 to 55) of each switching block of the first stage are coupled to trunk lines and in that the remaining outputs (20 to 23, 28 to 31) of each switching block of the first stage are uniformly coupled to the inputs (24 to 27, 32 to 35) of the switching blocks (8, 9) of the second stage and the outputs (36, 40, 44, 48; 37, 41, 45, 49) of each switching block of the second stage are uniformly coupled to the remaining inputs (38, 39; 42, 43; 46,47; 50, 51) of the switching blocks of the first stage.

4. Switching network as claimed in Claim 1, 2 or 3, characterized in that an input (16 to 19) of a switching block (4 to 7) of the first stage is coupled to a system control circuit (3) which generates control cells containing control and/or setting information.

5. Switching network as claimed in one of the preceding Claims, characterized in that a cell insertion circuit (62 to 67) which is connected to a control circuit (10 to 15) of the allocated switching block is coupled either to at least one input (28 to 31, 36, 37) or to at least one output of each switching block (4 to 9).

6. Switching network as claimed in Claim 5, characterized in that the cell insertion circuits (62 to 67) generate control cells containing status information and in that an output of a switching block (4 to 7) of the first stage is coupled to the system control circuit (3) receiving the control cells.

7. Switching network as claimed in one of the preceding Claims, characterized in that the routing information for each cell is transmitted over channels towards the switching blocks (4 to 9) and within the switching blocks.

8. Switching network as claimed in one of the preceding Claims, characterized in that the cell extraction circuit (56 to 61) comprises a first change-over switch (68) which leads cells to the allocated control circuit (10 to 15) when the switch has adopted a first state and, when the switch has adopted a second state, to the allocated switching block (4 to 9), and comprises an analysis circuit (69) which analyses the fed routing information and supplies the first change-over switch with a setting signal for setting this switch to the first state when there is a control cell.

9. Switching network as claimed in one of the Claims 5 to 8, characterized in that the cell insertion circuit (62 to 67) comprises a second change-over switch (70) which leads cells from an output (28 to 31, 36, 37) of the allocated switching block (4 to 9) when the switch has adopted a first state and, when the switch has adopted a second state, relays control cells from the allocated control circuit (10 to 15) and in that this switch is controlled by the allocated control circuit.

10. Switching network as claimed in one of the preceding Claims, characterized in that all the switching blocks (4 to 9) have an equal number of inputs and outputs and in that the number of inputs is equal to the number of outputs.

11. Switching network as claimed in Claim 10, characterized in that the switching blocks (4 to 9) have each sixteen inputs and sixteen outputs and in that the number of switching blocks (8, 9) in the second stage is equal to half the number of switching blocks (4 to 7) in the first stage.

## Revendications

1. Réseau de connexion destiné à un système de transmission à technique ATM ayant un premier étage avec plusieurs blocs de commutation (4 à 7) auxquels des cellules et des informations d'acheminement destinées à diverses lignes de départ sont délivrées par des lignes d'amenée et qui sont couplées à au moins un bloc de commutation (8, 9) d'un deuxième étage, caractérisé en ce que des entrées de blocs de commutation (4 à 7) du premier étage sont couplées à des lignes d'amenée et à au moins une sortie d'un bloc de commutation (8, 9) du deuxième étage et que des sorties de blocs de commutation du premier étage sont couplées à des lignes de départ et à au moins une entrée d'un bloc de commutation du deuxième étage.

2. Réseau de connexion selon la revendication 1, caractérisé en ce qu'à au moins une entrée ou à au moins une sortie de chaque bloc de commutation est couplé un circuit d'extraction de cellules (56 à 61), qui est relié à un circuit de commande respectif (10 à 15) du bloc de commutation affecté.

3. Réseau de connexion selon la revendication 1 ou 2, caractérisé en ce que la moitié des entrées (16 à 19) de chaque bloc de commutation (4 à 7) du premier étage est couplée à des lignes d'amenée, que la moitié des sorties (52 à 55) de chaque bloc de commutation du premier étage sont couplées à des lignes de départ, que les autres sorties (20 à 23, 28 à 31) de chaque bloc de commutation du premier étage sont couplées uniformément aux entrées (24 à 27, 32 à 35) des blocs de commutation (8, 9) du deuxième étage et que chaque sortie (36, 40, 44, 48; 37, 41, 45, 49) de chaque bloc de commutation du deuxième étage est couplée uniformément aux autres entrées (38, 39; 42, 43; 46, 47; 50, 51) des blocs de commutation du premier étage.

4. Réseau de connexion selon la revendication 1, 2 ou 3, caractérisé en ce qu'une entrée (16 à 19) d'un bloc de commutation (4 à 7) du premier étage est couplée à un circuit de contrôle du système (3) délivrant des cellules de commande avec des informations de commande et/ou de réglage.

5. Réseau de connexion selon l'une quelconque des revendications précédentes, caractérisé en ce qu'à au moins une entrée (28 à 31, 36, 37) ou à au moins une sortie de chaque bloc de commutation (4 à 9) est couplé un circuit d'insertion de cellules (62 à 67) qui est connecté respectivement à un circuit de commande (10 à 15) du bloc de commutation qui lui est affecté.

6. Réseau de connexion selon la revendication 5, caractérisé en ce que des cellules de commande avec des informations d'état sont délivrées par les circuits d'insertion de cellules (62 à 67) et qu'une sortie d'un bloc de commutation (4 à 7) du premier étage est couplée au circuit de contrôle de système (3) recevant les cellules de commande.

7. Réseau de connexion selon l'une quelconque des revendications précédentes, caractérisé en ce que l'information d'acheminement pour chaque cellule est transmise via des liaisons de trajet aux blocs de commutation (4 à 9) et dans les blocs de commutation.

8. Réseau de connexion selon l'une quelconque des revendications précédentes, caractérisé en ce que le circuit d'extraction de cellules (56 à 61) contient un premier commutateur (68), qui dirige des cellules dans un premier état au circuit de commande affecté (10 à 15) et dans un deuxième état au bloc de commutation affecté (4 à 9), et un circuit d'analyse (69), qui analyse les informations d'acheminement amenées et envoie au premier commutateur dans une cellule de commande un signal de réglage pour la mise dans le premier état.

9. Réseau de connexion selon l'une quelconque des revendications 5 à 8, caractérisé en ce que le circuit d'insertion de cellules (62 à 67) contient un deuxième commutateur (70), qui transfère dans un premier état, des cellules d'une sortie (28 à 31; 36, 37) du bloc de commutation affecté (4 à 9) et, dans un deuxième état, des cellules de commande du circuit de commande affecté (10 à 15), et qui est commandé par le circuit de commande affecté.

10. Réseau de connexion selon l'une quelconque des revendications précédentes, caractérisé en ce que tous les blocs de connexion (4 à 9) ont un nombre égal d'entrées et de sorties et en ce que le nombre d'entrées est égal au nombre de sorties.

11. Réseau de connexion selon la revendication 10, caractérisé en ce que les blocs de commutation (4 à 9) ont respectivement seize entrées et seize sorties et que le nombre des blocs de commutation (8, 9) du deuxième étage est égal à la moitié des blocs de commutation (4 à 7) du premier étage.
